# EUROPEAN PATENT APPLICATION

(11) **EP 4 621 672 A1**
(43) Date of publication of application: **24.09.2025**
(21) Application number: 24305424.4
(22) Date of filing: 21.03.2024
(51) Int. Cl.: G06Q 10/04, G05B 19/418, G06N 3/126, G06Q 10/06, G06Q 10/0631

(54) **METHOD AND A DEVICE FOR GENERATING AN OPTIMIZED TASKS SEQUENCE TO CONTROL A PRODUCTION LINE**

(71) Applicant: BULL SAS, 78340 Les Clayes-Sous-Bois (FR)
(72) Inventor: M, Chandrammohan, 635126 TAMILNADU (IN)
(74) Representative: Argyma

(57) **Abstract**

The invention relates to a method for generating an optimized sequence of several tasks to control the production of different products on a production line (30), comprising the steps of receiving input data related to the products to be produced by the production line (30), selecting at least one criterion in a set of predetermined criteria using the collected input data, generating a combined matrix by calculating the average of weighted criterion matrixes, applying a genetic algorithm to the combined matrix to derive a set of tasks sequences, selecting a tasks sequence, called optimized tasks sequence, among the determined at least one tasks sequence, and control the production line (30) according to the optimized tasks sequence to produce the products.

## Description

### [Field of the invention]

The invention relates to factory supply chain management and more particularly to a method and a device for generating an optimized tasks sequence to control a production line output which consists of series of products.

### [Background of the invention]

In supply chain management, the order in which each task asked in production is executed may be a key factor in the global efficiency of the process.

This problem is particularly important for manufacturers who use the same production line for different products, such as food & beverage industries, chemical industries, paper industries, automotive, etc.

These manufacturers sequence the different production tasks in a "plan-to-produce" cycle. This cycle takes notably into account the different products manufactured on the production line, the time to switch from one to another, and also the demand of the products and their priority, the availability of the raw materials, etc.

It is necessary to manage these multiple tasks for the different products in an efficient way by reducing the costs and the delays of delivery to the customers.

In a known manner, an initial sub-optimal plan-to-produce is set up and a corresponding objective function is determined. An optimization algorithm is then applied to the initial plan-to-produce cycle to determine an optimized plan-to-produce according to the objective function. Such an optimization process may be used to calculate a plan-to-produce cycle that extends on several days or weeks.

In this solution, the plan-to-produce cycle is generated according to initial constraints. However, these constraints may vary during the plan-to-produce cycle, in particular when the plan-to-produce cycle is planned to be used on a long term, which makes said plan-to-produce cycle unoptimized with time.

A solution to this problem is to stop the plan-to-produce cycle and calculate a new plan-to-produce cycle based on the new constraints. However, this solution implies to terminate the on-going tasks and determine the new plan-to-produce cycle based on the remaining tasks, which may render the whole process time consuming.

Hence, the more the plan-to-produce cycle is made to last over time, the more the constraints may vary and the more the chances to generate new plan-to-produce cycles and the overall processing time increase.

A straightforward solution would be to only generate short-term plan-to-produce cycles with least time horizon. However, this would still be time-consuming.

It is therefore an object of the present invention to provide a device and method for avoiding at least partly these drawbacks.

### [Summary of the invention]

To this end, the present invention concerns a method for generating an optimized sequence of several tasks to control the production of different products on a production line, said method comprising the steps of:
- receiving input data related to the products to be produced by the production line,
- selecting at least one criterion in a set of predetermined criteria using the collected input data,
- assigning a weight coefficient to each selected criterion,
- generating a criterion matrix for each selected criterion, said matrix comprising NxN elements, where N is the number of products to be produced by the production line, each element of said matrix being characterized by a row number and a column number and corresponding to a penalty for switching from the production of the product associated with said row to the production of a product associated with said column,
- multiplying each generated criterion matrix by the corresponding weight coefficient,
- generating a combined matrix by calculating the average of the weighted matrixes,
- applying a genetic algorithm to the combined matrix to derive a set of tasks sequences, each task sequence defining an order of production of the products,
- calculating, for each tasks sequence, the sum of the penalties of the tasks of the sequence,
- selecting, among the derived set of tasks sequences, a tasks sequence, called optimized tasks sequence, with the lowest sum of penalties,
- controlling the production line according to the optimized tasks sequence to produce the products.

Input data covers main data (raw materials, plant, lead time...) and the transaction data (planned orders and process orders). In other words, input data may comprise availability of resources, limitation of adherence to specific schedule of orders, product priority, order priority, requirement date priority, customer priority, vendor priority, resources, machines, rules like product transition which need to be scheduled for each production run or campaign on a specific time window.

Using the combined matrix in the optimization algorithm enables to consider all the criteria at the same time and not only one at the time. The optimization of the tasks sequence is performed on only one objective function which is the sum of the penalties of the tasks sequence. This ensure that the at least one task sequence generated is resilient in regards of all of these criteria in case of a modification of the production cycle of the production line. As the number of products to be manufactured on the production line grows larger, the number of possible tasks sequences becomes too large to compute the sum of the penalties for each one. In order to find the lowest sum of penalties, an optimization algorithm such as the genetic algorithm is efficient to minimize the computational time. Furthermore, the format of the tasks sequence, i.e. a string of products, make the genetic algorithm particularly convenient.

The selection of the optimized tasks sequence may alternatively be based on the comparison of an objective function calculated for all the determined tasks sequences, such as the total duration of the plan to produce, the cost, the total quantity of each product etc.

Advantageously, the weight coefficients are different and in a preferred embodiment the weight coefficients range between 1 and 10. This allows the operator to variate the priority of each criterion according to the current objectives and current situation of the production line.

In a preferred embodiment, the number of criteria is limited to 10.

Advantageously, the set of predetermined criteria comprises a plurality of criteria selected in a list of criteria comprising: a setup time parameter, a total duration parameter, a color parameter, a customer priority parameter, an order priority parameter, a stocking priority parameter, an expert priority parameter, a resource consumption-based priority parameter, a shelf-life-based priority parameter and an ingredient-shelf-life priority parameter.

According to an aspect of the invention, the lines and the coefficients of the combined matrix are modified using a genetic algorithm, known as such, in which each line of the initial combined matrix is viewed as a tasks sequence and during which the order of the lines is modified, then a random number of coefficients are exchanged between the lines and a random number of coefficients are randomly modified. In other words, a genetic algorithm is applied to the combined matrix to minimize the objective function, which in this case is the sum of the penalties of a tasks sequence. At the end of an iteration, the sum of the penalties is calculated for each of the modified tasks sequences. At the end of the iterations, the optimal tasks sequence contains all the products specified and reaches a minimum of the sum of penalties.

In a preferred embodiment, the determination of at least one tasks sequence comprises the determination of a plurality of tasks sequences. The plurality of tasks sequences presents a panel of tasks sequences in which the operator or the planning module may choose the best suited sequence according to the current objectives.

Advantageously in the embodiment described in the previous paragraph, the method further comprises a step of training a generative artificial intelligence algorithm with the plurality of determined tasks sequences to obtain the optimized tasks sequence. The generative artificial intelligence may produce the tasks sequences according to the input data and the weighted criteria faster than the genetic algorithm or any other optimization algorithm once it has been trained on large number of cases.

The invention comprises also a computer program comprising instructions which, when the program is executed by a computer, cause the computer to carry out the steps of the method presented above.

According to an aspect of the invention, the invention concerns a tasks sequence solver for generating an optimized sequence of several task to control the production of products on a production line, said tasks sequence solver being configured to:
- receive input data related to the products to be produced by the production line,
- select at least one criterion in a set of predetermined criteria using the collected input data,
- assign a weight coefficient to each selected criterion,
- generate a criterion matrix for each selected criterion, said matrix comprising NxN elements, where N is the number of products to be produced by the production line, each element of said matrix being characterized by a row number and a column number and corresponding to a penalty for switching from the production of the product associated with said row to the production of a product associated with said column,
- multiply each generated criterion matrix by the corresponding weight coefficient,
- generate a combined matrix by calculating the average of the weighted matrixes,
- applying a genetic algorithm to the combined matrix to derive a set of tasks sequences, each task sequence defining an order of production of the products,
- calculating, for each tasks sequence, the sum of the penalties of the tasks of the sequence,
- selecting, among the derived set of tasks sequences, a tasks sequence, called optimized tasks sequence, with the lowest sum of penalties,
- controlling the production line according to the optimized tasks sequence to produce the products.

Preferably, the weight coefficients received by the tasks sequence solver according to the invention are different. In a preferred embodiment the weight coefficients range between 1 and 10. This allows the operator to variate the priority of each criterion according to the current objectives and current situation of the production line.

Preferably, the number of criteria received by the tasks sequence solver according to the invention is limited to 10.

Advantageously, the set of predetermined criteria of the tasks sequence solver comprises a plurality of criteria selected in a list of criteria comprising: a setup time parameter, a total duration parameter, a color parameter, a customer priority parameter, an order priority parameter, a stocking priority parameter, an expert priority parameter, a resource consumption-based priority parameter, a shelf-life-based priority parameter and an ingredient-shelf-life priority parameter.

Advantageously, the tasks sequence solver is configured to determine the at least one task sequence using an Al algorithm.

In a preferred embodiment, the tasks sequence solver is further configured to determine a plurality of tasks sequences using the generated combined matrix. The plurality of tasks sequences presents a panel of tasks sequences in which the operator or the planning module may choose the best suited sequence according to the current objectives.

Advantageously, the tasks sequence solver is further configured to determine only one task sequences using the generated combined matrix. This only task sequence is the directly sent to the planning module or to the operator.

In an embodiment, the tasks sequence solver is further configured to train a generative artificial intelligence algorithm with the plurality of determined tasks sequences to obtain the optimized tasks sequence. The generative artificial intelligence may produce the tasks sequences according to the input data and the weighted criteria faster than an optimization algorithm once it has been trained on large number of cases.

According to another aspect of the invention, the invention concerns a system for controlling the production of products on a production line, said system comprising:
- a tasks sequence solver as presented,
- a planning module configured to collect and send the input data to said tasks sequence solver, to receive an optimized tasks sequence from the tasks sequence solver and to control the production line using said received optimized tasks sequence,
- a production line configured to be controlled by said planning module using said received optimized tasks sequence to produce different products.

### [Brief description of the drawings]

These and other features, aspects, and advantages of the present invention are better understood with regard to the following Detailed Description of the Preferred Embodiments, appended Claims, and accompanying Figures, where:
FIGURE 1 schematically illustrates the device generating an optimized tasks sequence according to the invention.
FIGURE 2 illustrates an abstract example of a combined matrix of the transition between non-specific tasks A, B, C, D, E, F, G, H, I.

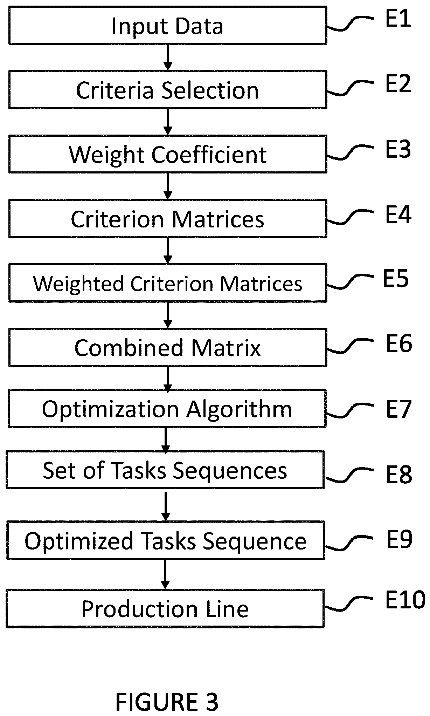

FIGURE 3 illustrates an embodiment the method of optimizing task sequence according to an aspect of the invention.

### [Detailed description]

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein are made collectively or individually when there may be more than one element of the same type. However, such references are merely exemplary in nature. It may be noted that any reference to elements in the singular may also be construed to relate to the plural and vice-versa without limiting the scope of the disclosure to the exact number or type of such elements unless set forth explicitly in the appended claims.

### System 1

The system 1 for generating an optimized tasks comprises a planning module 10, a tasks sequence solver 20, the production line 30.

### Planning module 10

The planning module 10 collects and stores data about the production line 30 and the products and generates and stores the plan to produce sequence.

The planning module 10 may comprise an Enterprise Resource Planning (ERP) system and an Advanced Planning (APS) system.

The Enterprise Resource Planning (ERP) system collects and stores data such as the different tasks that may be carried out on the production line 30, the duration of each task, the succession of task to produce a specific product, the available stock of raw materials and their supply lines, the clients' needs etc.

The Advanced Planning System generates and stores the plan to produce a command sequence to be applied in the production line 30.

### Tasks sequence solver 20

The tasks sequence solver 20 receives data and constraints from the planning module 10 and calculates an optimized tasks sequence.

The tasks sequence solver 20 is configured to receive input data related to the products to be produced by the production line 30.

The tasks sequence solver 20 receives at least one criterion selected by an operator in a set of predetermined criteria using the collected input data and the weight coefficient assigned to each of the at least one criterion.

There are up to ten criteria and the weight coefficients are all different and range between one and ten.

The tasks sequence solver 20 is configurated to generate a criterion matrix for each selected criterion, said criterion matrix comprising NxN elements, where N is the number of products to be produced by the production line 30, each element of said criterion matrix being characterized by a row number and a column number and corresponding to a penalty for switching from the production of the product associated with said row to the production of a product associated with said column.

For example, if the production line 30 is used to process a product A and a product B, and i is the index number of product A and j the index of product B, the element on the row i and the column j of the criterion matrix for the criterion of the clean-up time represents the time required to clean the production line 30 between the processing of product A and the processing of product B. The elements on the main diagonal of the criterion matrix (where i and j are equal) are equals to zero because it represents no change of product.

The tasks sequence solver 20 is configured to multiply each generated criterion matrix by the corresponding weight coefficient.

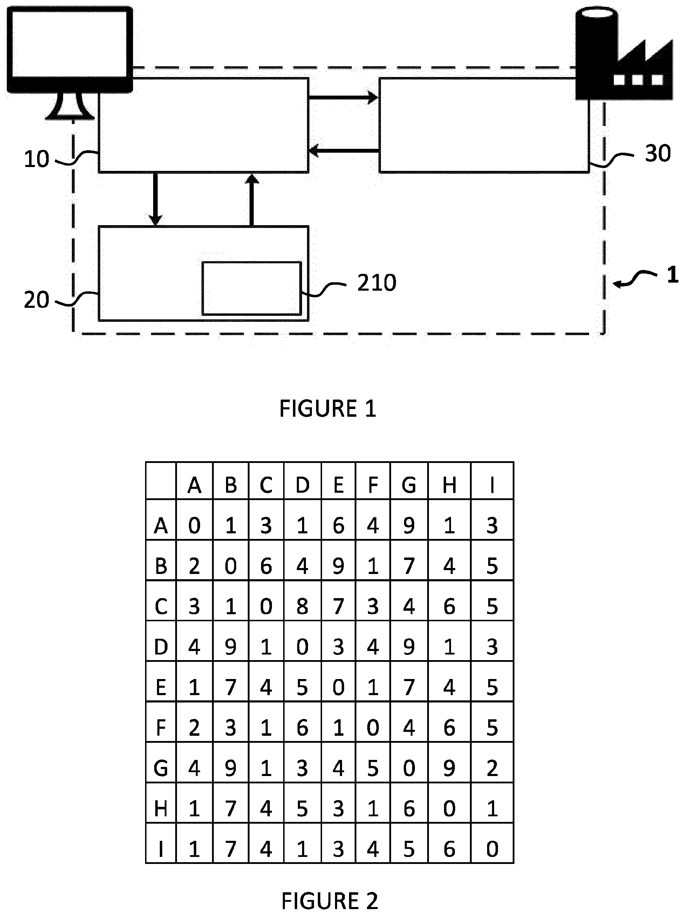

The tasks sequence solver 20 is configured to calculate the combined matrix that is used in the determination of the optimized tasks sequence by calculating the average of the weighted matrices. Figure 2 illustrates an abstract example of a combined matrix between non-specific tasks A, B, C, D, E, F, G, H, I.

In the case of the abstract combined matric of Figure 2, the coefficient in the A column and in the D line represents the penalty of switching the production line 30 to product D after processing product A. The coefficients on the diagonal line are all equal to 0 as there is no penalty to continue processing the same product.

From the combined matrix it is possible to determine the sum of the penalties of any tasks sequence containing every product of the N products, which is the sum of the penalties of switching from one product in the tasks sequence to the next one.

Regarding Figure 2, the sum of penalties of the tasks sequence (A, B, C, D, E, F, G, H, I) is 1+6+8+3+1+4+9+1 = 33.

When the number of products is large, the number of possible tasks sequences is too large to calculate the penalty of each tasks sequence in order to determine the optimized tasks sequence. The optimized tasks sequence is the tasks sequence with the lowest sum of penalties possible.

The tasks sequence solver 20 is configured to run an optimization algorithm based on known algorithm techniques called "genetic algorithm techniques" in order to determine the optimized tasks sequence.

The genetic algorithm integrates the combined matrix and determine a set of initial tasks sequences, and then alter these initial tasks sequences by imitation of the genetic mutations in order to determine another set of tasks sequences whose sums of penalties are lower than those of the initial set.

The genetic algorithm may iterate on these sets of tasks sequences until no tasks sequence with a lower sum of penalties can be found.

Once the initial set of tasks sequences have been determined, the genetic algorithm calculates the sum of penalties of each tasks sequence and then permutates the tasks sequences according to their sum of penalties.

For instance, the genetic algorithm may sort the tasks sequences from the lowest sum of penalties to the highest sum of penalties, or sort them randomly according to random generated numbers.

Then the algorithm determines among the permutated set of tasks sequences the ones to be replaced by a combination of others tasks sequences of the same set. For example, after determining a random integer X, the genetic algorithm may select the lasts X tasks sequences of the permutated set of tasks sequences, or the X tasks sequences with the highest sums of penalties.

Theses X tasks sequences are then replaced by combinations of tasks sequences. The combination consists in swapping two sub-sets from a tasks sequence to another.

Preferably, the swapped sub-sets contain the same products, in order to ensure that the resulting tasks sequences have all the products to be produced. For instance, a combination between the tasks sequence (A, B, C, D, E, F, G, H, I) and the tasks sequence (B, G, D, F, C, E, I, A, H) may be the tasks sequence (B, G, C, D, E, F, I, A, H) since the swapped sub-set contains the products C, D, E and F.

After the permutations of the tasks sequences and the replacements of a random number of them with combinations of tasks sequences, the genetic algorithm alters a part of the tasks sequences by swapping products in them.

For instance, in this step, the task sequence (B, G, C, D, E, F, I, A, H) may become (B, G, A, D, E, F, I, C, H), with products C and H swapped.

The altered tasks sequences and the number of swaps are determined randomly by the genetic algorithm, preferably with generating random numbers indicating which tasks sequence is subjected by the swap and which products in it are swapped.

After this swap, the genetic algorithm has determined a new set of tasks sequences. The genetic algorithm determines for each tasks sequence its sum of penalties with the coefficients of the combined matrix.

The genetic algorithm may stop after this step and outputs the task sequence with the lowest sum of penalties of the resulting set, or choose at least one of the tasks sequences of the resulting set to create a new set and re-iterate the previous operations on this new set.

Preferably, the genetic algorithm chooses at least one of the tasks sequences of the resulting set and at least one task sequence of the initial set to create a new set and re-iterate the previous operations on this new set.

The tasks sequence solver 20 is configured to select a tasks sequence, called optimized tasks sequence, among the at least one tasks sequence determined by the genetic algorithm.

The tasks sequence solver 20 sends the optimized tasks sequence to the planning module 10.

The tasks sequence solver 20 comprises the artificial intelligence module 210.

The artificial intelligence module 210 is able to receive prompts from the operator containing collected data and selected constraints and generate, using Large Language Models (LLMs), a task sequence after being trained on a large number of optimized tasks sequences calculated by the tasks sequence solver 20.

The system 1 may use an artificial intelligence module 210 specifically developed for the production line 30 and integrated in the tasks sequence solver 20 or use a generical artificial intelligence module 210 on a cloud solution or an external server.

### Production Line 30

The production line 30 comprises a succession several machines and devices to produce several products according to the plan to produce calculated by the tasks sequence solver 20 and received from the planning module 10.

### Example of operation

The method of optimization of the tasks sequence is carried out before the start of the production. At the beginning method for generating an optimized sequence of several tasks to control the production of different products on a production line 30, said method comprising the steps of:

In a first step E1 the planning module 10 receiving input data related to the products to be produced by the production line 30, for example the type of products, the quantity desired by the clients, the due date of manufacturing, the raw materials and their availability, the set-up time for each product, the cleaning time of the production line 30 after each product, etc.

In a second step E2, an operator selects as much as ten criteria among a set of predetermined criteria. The selection may be based on the general knowledge of the operator and the collected input data.

The predetermined criteria set may comprise criterion such as a setup time parameter, a total duration parameter, a color parameter, a customer priority parameter, an order priority parameter, a stocking priority parameter, an expert priority parameter, a resource consumption-based priority parameter, a shelf-life-based priority parameter and an ingredient-shelf-life priority parameter.

In a third step E3, the operator assigns a weight coefficient to each selected criterion, ranking the criteria from the lowest weight coefficient to the largest weight coefficient.

Once the weight coefficients are assigned, the received data, the selected criteria and the assigned weights coefficients are sent to the tasks sequence solver 20.

The tasks sequence solver 20 generates in a fourth step E4 a criterion matrix for each selected criterion, said criterion matrix comprising NxN elements, where N is the number of products to be produced by the production line 30, each element of said criterion matrix being characterized by a row number and a column number and corresponding to a penalty for switching from the production of the product associated with said row to the production of a product associated with said column.

In a fifth step E5, the tasks sequence solver 20 multiplies each generated criterion matrix by the corresponding weight coefficient.

In a sixth step E6, the tasks sequence solver 20 generates a combined matrix by calculating the average of the weighted criterion matrixes.

In a seventh step E7, the tasks sequence solver 20 applies the genetic algorithm on the combined matrix to derive a set of tasks sequences, each task sequence defining an order of production of the products. This step involves the permutation of the tasks sequences, combining and replacing a number of tasks sequences and swapping products in some tasks sequences.

In the eighth step E8, the genetic algorithm calculates, for each tasks sequence of the modified set, the sum of the penalties of the tasks of the sequence.

At the end of step E8, the genetic algorithm has generated at least one task sequence whose sum of penalties has been minimized. The genetic algorithm may output the at least one task sequence or generate another set of tasks sequence based on the at least one task sequence and re-iterates steps E7 and E8.

In the step E9, the planning module 10 selects a tasks sequence, called optimized tasks sequence, among the determined at least one tasks sequence.

In a tenth step E10, the production line 30 is controlled according to the optimized tasks sequence to produce the products and to start the plan to produce cycle.

According to another aspect of the invention, after the selection on an optimized tasks sequence by the planning module 10, said optimized tasks sequence and the corresponding data, constraints and weight coefficients are sent to an artificial intelligence module 210.

The artificial intelligence module 210 is thus trained by several sets of data, constraints and weight coefficients and the corresponding optimized tasks sequence and the operator may use it after enough training has been carried out to calculate an optimized tasks sequence in a shorter and more convenient way than using the planning module 10 and the tasks sequence solver 20.

The operator is able to receive the optimized tasks sequence from the artificial intelligence module 210 after prompting it with the data collected and the constraints selected. The artificial intelligence module 210 uses methods based on Large Language Models (LLM) to generate an optimized tasks sequence from a large panel of cases of previous optimized tasks sequences calculated by the tasks sequence solver 20.

During the training, the task sequence calculated by the tasks sequence solver 20 and the task sequence generated by the artificial intelligence module 210 are compared. The comparison is used to train the artificial intelligence module 210 and enable it to generate better suited tasks sequences.

The device and method according to the invention allow therefore efficiently, rapidly and easily generating an optimized tasks sequence to control a production line 30.

The Specification, which includes the Summary of Invention, Brief Description of the Drawings and the Detailed Description of the Preferred Embodiments, and the appended Claims refer to particular features (including process or method steps) of the invention. Those of skill in the art understand that the invention includes all possible combinations and uses of particular features described in the Specification. Those of skill in the art understand that the invention is not limited to or by the description of embodiments given in the Specification. Those of skill in the art also understand that the terminology used for describing particular embodiments does not limit the scope or breadth of the invention.

## Claims

1. A method for generating an optimized sequence of several tasks to control the production of different products on a production line (30), said method comprising the steps of:
- receiving (E1) input data related to the products to be produced by the production line (30),
- selecting (E2) at least one criterion in a set of predetermined criteria using the collected input data,
- assigning (E3) a weight coefficient to each selected criterion,
- generating (E4) a criterion matrix for each selected criterion, said criterion matrix comprising NxN elements, where N is the number of products to be produced by the production line (30), each element of said criterion matrix being **characterized by** a row number and a column number and corresponding to a penalty for switching from the production of the product associated with said row to the production of a product associated with said column,
- multiplying (E5) each generated criterion matrix by the corresponding weight coefficient,
- generating (E6) a combined matrix by calculating the average of the weighted criterion matrixes,
- applying (E7) a genetic algorithm to the combined matrix to derive a set of tasks sequences, each task sequence defining an order of production of the products,
- calculating (E8), for each tasks sequence, the sum of the penalties of the tasks of the sequence,
- selecting (E9), among the derived set tasks sequences, a tasks sequence, called optimized tasks sequence, with the lowest sum of penalties,
- controlling (E10) the production line (30) according to the optimized tasks sequence to produce the products.

2. The method according to claim 1, wherein the weight coefficients are different.

3. The method according to any of the preceding claims, wherein the number of criteria is limited to 10.

4. The method according to any of the preceding claims, wherein the set of predetermined criteria comprises a plurality of criteria selected in a list of criteria comprising: a setup time parameter, a total duration parameter, a color parameter, a customer priority parameter, an order priority parameter, a stocking priority parameter, an expert priority parameter, a resource consumption-based priority parameter, a shelf-life-based priority parameter and an ingredient-shelf-life priority parameter.

5. The method according to any of the preceding claims, wherein the determination of at least one tasks sequence comprises the determination of a plurality of tasks sequences.

6. The method according to the preceding claim, wherein the method further comprises a step of training a generative artificial intelligence algorithm with the plurality of determined tasks sequences to obtain the optimized tasks sequence.

7. A computer program comprising instructions which, when the program is executed by a computer, cause the computer to carry out the steps of the method according to any one of the preceding claims.

8. A tasks sequence solver (20) for generating an optimized sequence of several task to control the production of products on a production line (30), said tasks sequence solver (20) being configured to:
- receive input data related to the products to be produced by the production line (30),
- select at least one criterion in a set of predetermined criteria using the collected input data,
- assign a weight coefficient to each selected criterion,
- generate a criterion matrix for each selected criterion, said criterion matrix comprising NxN elements, where N is the number of products to be produced by the production line (30), each element of said criterion matrix being **characterized by** a row number and a column number and corresponding to a penalty for switching from the production of the product associated with said row to the production of a product associated with said column,
- multiply each generated criterion matrix by the corresponding weight coefficient,
- generate a combined matrix by calculating the average of the weighted matrixes,
- apply a genetic algorithm to the combined matrix to derive a set of tasks sequences, each task sequence defining an order of production of the products,
- calculate, for each tasks sequence, the sum of the penalties of the tasks of the sequence,
- select, among the derived a set of tasks sequences, a tasks sequence, called optimized tasks sequence, with the lowest sum of penalties,
- control the production line (30) according to the optimized tasks sequence to produce the products.

9. The tasks sequence solver (20) according to claim 8, wherein the weight coefficients are different.

10. The tasks sequence solver (20) according to any of claims 8 or 9, wherein the number of criteria is limited to 10.

11. The tasks sequence solver (20) according to any of claims 8 to 10, wherein the set of predetermined criteria comprises a plurality of criteria selected in a list of criteria comprising: a setup time parameter, a total duration parameter, a color parameter, a customer priority parameter, an order priority parameter, a stocking priority parameter, an expert priority parameter, a resource consumption-based priority parameter, a shelf-life-based priority parameter and an ingredient-shelf-life priority parameter.

12. The tasks sequence solver (20) according to any of claims 8 to 11, said tasks sequence solver (20) being further configured to determine a plurality of tasks sequences using the generated combined matrix.

13. The tasks sequence solver (20) according to any of claims 8 to 11, said tasks sequence solver (20) being further configured to determine only one task sequences using the generated combined matrix.

14. The tasks sequence solver (20) according to any of claims 8 to 12, said tasks sequence solver (20) being further configured to train a generative artificial intelligence algorithm with the plurality of determined tasks sequences to obtain the optimized tasks sequence.

15. A system (1) for controlling the production of products on a production line (30), said system (1) comprising:
- a tasks sequence solver (20) according to any of claims 8 to 13,
- a planning module (10) configured to collect and send the input data to said tasks sequence solver (20), to receive an optimized tasks sequence from the tasks sequence solver (20) and to control the production line (30) using said received optimized tasks sequence,
- a production line (30) configured to be controlled by said planning module (10) using said received optimized tasks sequence to produce different products.
